Europäisches Patentamt

European Patent Office

Office européen des brevets

(19)

(11) **EP 0 962 069 B1**

(12) **FASCICULE DE BREVET EUROPEEN**

(45) Date de publication et mention
de la délivrance du brevet:
**14.01.2004 Bulletin 2004/03**

(51) Int Cl.[7]: **H04L 9/30**

(21) Numéro de dépôt: **98909555.9**

(22) Date de dépôt: **17.02.1998**

(86) Numéro de dépôt international:
**PCT/FR1998/000304**

(87) Numéro de publication internationale:
**WO 1998/037662 (27.08.1998 Gazette 1998/34)**

(54) **SYSTEME CRYPTOGRAPHIQUE COMPRENANT UN SYSTEME DE CHIFFREMENT ET DE DECHIFFREMENT ET UN SYSTEME DE SEQUESTRE DE CLES**

KRYPTOGRAPHISCHE VORRICHTUNG MIT VERSCHLÜSSELUNGS UND ENTSCHLÜSSELUNGSSYSTEM UND SCHLÜSSELHINTERLEGUNGSSYSTEM

CRYPTOGRAPHIC SYSTEM COMPRISING A CIPHERING AND DECIPHERING SYSTEM AND A KEY ESCROW SYSTEM

(84) Etats contractants désignés:
**DE ES FR GB IT**

(30) Priorité: **19.02.1997 FR 9702244**

(43) Date de publication de la demande:
**08.12.1999 Bulletin 1999/49**

(73) Titulaire: **GEMPLUS S.C.A.**
**13881 Gémenos Cedex (FR)**

(72) Inventeurs:
• **NACCACHE, David**
**F-75009 Paris (FR)**
• **LEVY-DIT-VEHEL, Françoise**
**F-75015 Paris (FR)**
• **STERN, Jacques**
**F-75013 Paris (FR)**

(56) Documents cités:
• **HARN L: "Public-key cryptosystem design based on factoring and discrete logarithms" IEE PROCEEDINGS-COMPUTERS AND DIGITAL TECHNIQUES, MAY 1994, UK, vol. 141, no. 3, ISSN 1350-2387, STEVENAGE (GB), pages 193-195, XP000454518**

## Description

La présente invention concerne un système cryptographique, comprenant un système de chiffrement et déchiffrement et un système de séquestre de clés, et les appareils et dispositifs associés.

Elle est particulièrement destinée à être mise en oeuvre dans des systèmes électroniques du type cartes à puce, cartes PCMCIA, des badges, des cartes sans contact ou tout autre appareil portable.

La plupart des systèmes de cryptographie à clé publique (dite aussi cryptographie asymétrique) existant à ce jour mettent en oeuvre l'algorithme de chiffrement RSA, publié en 1978 par R. Rivest, A. Shamir et L. Adleman puis breveté sous l'intitulé « *Cryptographic Communications System and Method* » et la référence US 4,405,829.

Mis à part le système RSA, il existe très peu de procédés et systèmes pratiques de chiffrement à clé publique. Il existe cependant un autre système, moins connu et relativement peu utilisé: il s'agit du système El-Gamal, connu sous l'intitulé « *A public-key cryptosystem and a signature scheme based on discrete logarithms* » et publié dans la revue IEEE *Transactions on Information Theory,* vol. IT-31, no. 4, 1985, pp. 469-472.

Un cryptogramme RSA ou El Gamal est en fait un grand nombre représenté dans un ordinateur par des chaînes de chiffres binaires ou hexadécimales. Le cryptogramme est calculé à l'aide d'une ressource de calcul logicielle (programme) et/ou matérielle (circuit électronique) mettant en oeuvre une série de règles de calcul (l'algorithme de chiffrement) devant être appliquées lors du traitement d'un ensemble de paramètres accessible à tous afin de cacher le contenu des données traitées. De façon analogue, le cryptogramme est déchiffré à l'aide d'une ressource de calcul logicielle ou matérielle mettant en oeuvre une série de règles de calcul (l'algorithme de déchiffrement) appliquées (par le récepteur du cryptogramme) sur un ensemble de paramètres secrets et publics et le cryptogramme.

Le système ou procédé de chiffrement fait usage d'une clé publique afin de produire le cryptogramme. Le procédé de déchiffrement utilise une clé privée qui correspond à la clé secrète sans toutefois lui être identique. Un utilisateur d'un appareil électronique portable, par exemple une carte à puce, possède une paire de clés (appelées clé publique et clé secrète). Il est supposé que les clés publiques sont connues de tous les utilisateurs alors que les clés secrètes ne sont jamais dévoilées. Toute personne a la capacité de chiffrer un message pour un utilisateur en utilisant la clé publique de ce dernier mais des cryptogrammes ne peuvent être déchiffrés autrement qu'en utilisant la clé secrète de l'utilisateur.

A titre d'illustration il va être décrit dans ce qui suit le fonctionnement de l'algorithme bien connu RSA.

Les paramètres de l'algorithme RSA sont:

① Deux nombres premiers secrets p et q de taille au moins égale à 256 bits. Ces nombres premiers sont générés d'une façon particulière dont le détail n'est pas indispensable à la compréhension de la présente invention mais peut être toutefois retrouvé dans l'ouvrage « *Cryptographie Appliquée, Algorithmes, Protocoles et Codes Source »,* par Bruce Schneier (Traduction de Marc Vauclair), Editions Thomson Publishing.

② Un module public n = p q.

③ Une paire d'exposants notée {e,d}, e étant un exposant public et d un exposant secret tels que:

$$e\, d = 1 \bmod (p-1)\,(q-1)$$

L'exposant e, appelé « exposant de chiffrement » est accessible à tous alors que « l'exposant de déchiffrement » d doit rester secret.

Afin de chiffrer le message m, l'expéditeur calcule le cryptogramme $c = m^e \bmod n$ et le récepteur ou organe vérifieur déchiffre c en calculant $m = c^d \bmod n$.

Le fonctionnement de l'algorithme d'El-Gamal est, quand à lui, un peu plus complexe et ne présente pas un intérêt particulier pour la compréhension de la présente invention.

Le document suivant " HARN L. : « Public-key cryptosystem design based on factoring and discrete logarithms » IEE Proceedings-Computers and Digital Techniques, may 1994, UK vol. 141, n° 3, ISSN 1350-2387, STEVENAGE (GB), pages 193-195" concerne un système cryptographique basé sur deux hypothèses connues qui sont la factorisation et les logarithmes discrets. Casser un tel système est pratiquement impossible par ce qu'il nécessite de résoudre le problème du logarithme discret de Diffie-Hellman dans un sous groupe de $Z_p^*$, dans lequel p=2p' x q' et p' et q' sont deux grands nombres premiers, et ensuite de factoriser (p-1)/2 avec deux grands nombres premiers. Dans ce document, il est possible de choisir la même taille des paramètres de sécurité pour ces deux hypothèses et de maintenir l'efficacité de l'implémentation.

La présente invention concerne un système cryptographique comprenant un système de chiffrement-déchiffrement à clé publique alternatif qui présente une alternative à la méthode RSA et à la méthode d'El-Gamal et un système de séquestre de clés (communément appelé en Anglais « *key escrow* »).

Selon l'invention, il est prévu que le système cryptographique associant les principes dits du logarithme discret et de la factorisation, comprend entre autres des clés publiques et une clé secrète, et est caractérisé en ce que lesdites clés publiques comprennent, au moins:

    a. un module RSA n, de taille supérieure à 640 bits, ayant la propriété suivante:

$$n=(A\,p_A + 1)x(B\,p_B + 1)$$

dans laquelle:

$p_A$ et $p_B$ sont des nombres premiers de taille supérieure à 320 bits,
$(A\,p_A + 1)$ est un premier RSA noté p,
$(B\,p_B + 1)$ est un premier RSA noté q,
A est le produit de k/2 (k étant un nombre entier pair compris entre 10 et 120) nombres premiers (notés p[i], i=1 à k/2) de taille relativement petite (entre 2 et 16 bits) et
B est le produit de k/2 nombres premiers (notés encore p[i], i=k/2+1 à k);
les p[i] étant de taille relativement petite (entre 2 et 16 bits), et pouvant également être mutuellement premiers;

b. une base d'exponentiation g, d'ordre $\phi$ (n)/4 (où $\phi$ (n) note la fonction indicatrice d'Euler), g ne devant donc pas être une puissance p[i]-eme modulo n d'aucun nombre.

Plus précisément, l'invention se rapporte à un système cryptographique comprenant au moins un système de chiffrement-déchiffrement caractérisé en ce que: le chiffrement d'un message m, m<AB, consiste en l'opération:

$$c=g^m \bmod n$$

où c note le cryptogramme (message chiffré).
D'une manière préférentielle, le système cryptographique selon l'invention est caractérisé en ce que l'intégrité de m peut être assurée par le chiffrement de m|h(m) (h dénotant une fonction de hachage et | la concaténation), ou par le chiffrement de DES(clé,m), « clé » étant une clé accessible à tous.
La présente invention a également pour objet la description d'un système de séquestre. Selon l'invention, ladite clé secrète du déchiffreur ou du centre de séquestre est le nombre $\phi$(n) et l'opération de déchiffrement ou de recouvrement de l'identité d'un utilisateur consiste en les étapes suivantes:

a. calculer pour i allant de 1 à k: $y[i] = c^{\phi(n)/p[i]} \bmod n$;

b. pour i allant de 1 à k
pour j allant de 1 à p[i]
comparer y[i] aux valeurs $g^{j\phi(n)/p[i]} \bmod n$ indépendantes de m; si $g^{j\Phi(n)p[i]} \bmod n = y[i]$ alors affecter $\mu[i]=j$

c. recomposer le message m à partir du théorème des restes chinois TRC et des valeurs u[i].

Selon une variante de réalisation, ledit déchiffreur accélère le calcul des quantités y[i] en calculant:

a) $z=c^r \bmod n$.où $r=p_A p_B$

b) pour i allant de 1 à k: $y[i] = z^{AB/p[i]}) \bmod n$,

de manière à profiter de la différence de taille entre AB/p[i]) et $\square$(n)/p[i] pour accélérer les calculs.
Selon une autre variante de réalisation de l'invention, le déchiffreur pré-calcule et sauvegarde, une fois pour toutes, la table des valeurs $g^{j\phi(n)/p[i]} \bmod n$ pour $1 \le i \le k$ et $1 \le j \le p[i]$
ou,
plus spécifiquement une troncature ou un hachage de ces valeurs (noté h) ayant la propriété suivante:

$$h(g^{j\phi(n)/p[i]} \bmod n) \neq h(g^{j\phi(n)/p[i]} \bmod n)\ \text{si}\ j \neq j'.$$

Ainsi, cela évite d'une part le re-calcul pour chaque i des quantités $g^{j\phi(n)/p[i]} \bmod n$, et d'autre part le stockage de valeurs de trop grande taille.
Selon un autre mode préférentiel de l'invention, le déchiffreur accélère ses calculs en déchiffrant séparément le message modulo p puis modulo q et en composant les résultats modulo à l'aide du théorème des restes Chinois afin de retrouver m.
Le système de séquestre est réalisé par les étapes de fonctionnement suivantes:

a. l'autorité de séquestre code l'identité de l'utilisateur ID = $\Sigma 2^{i-1}$ ID[i] où ID[i] sont les bits de l'identité dudit utilisateur du système (la somme étant prise pour i allant de 1 à k) en calculant e(ID) = $\Pi p[i]^{ID[i]}$ (le produit étant pris pour i allant de 1 à k);
b. elle délivre à l'utilisateur une clé (c'est à dire une base d'exponentiation) El-Gamal c = $g^{e(ID)u} \bmod n$,
    dans laquelle u est un grand premier aléatoire ou un nombre premier avec $\phi$(n);
c. elle rend ainsi possible à l'utilisateur de dériver de c sa clé publique El-Gamal en choisissant un aléa x et en élevant c à la puissance x modulo n.
d. dans le but de retrouver la trace de l'utilisateur, l'autorité extrait du cryptogramme El-Gamal du chiffreur, ledit cryptogramme comprenant toujours deux parties, la partie:
v = c' mod n
où r est l'aléa de chiffrement choisi par le chiffreur.
e. Connaissant $\phi$(n), ladite autorité retrouve les bits ID[i] par l'algorithme suivant:

① calculer pour i allant de 1 à k: $y[i] = v^{\phi(n)/p[i]} \bmod n$
② si y[i]=1, alors $\mu[i]=1$, sinon $\mu[i] = 0$
③ calculer

$$ID' = \Sigma 2^{i-1} \, \mu[i]$$

④ retrouver: $ID = CCE(ID')$

dans lequel CCE note un mécanisme (optionnel) de correction d'erreurs (du type de ceux décrits dans l'ouvrage *« Codes Correcteurs, Théorie et Pratique »* par A. Poli et L. Huguet, Editions Masson) destiné à corriger les perturbations introduites dans le cas d'une utilisation illicite d'un r composite.

Un autre système de séquestre proposé est basé sur le mécanisme d'échange de clés dit de Diffie-Hellman où un nombre c, obtenu en élevant g à une puissance aléatoire a modulo n par l'une des parties, est intercepté par ladite autorité de séquestre:

$$c = g^{\alpha} \bmod n$$

ladite autorité de séquestre retrouve a de la façon suivante:

a. connaissant la factorisation de n, ladite autorité retrouve, à l'aide de l'algorithme de déchiffrement, la valeur

$$\alpha = a \bmod AB$$

soit

$$a = \alpha + \beta \, AB;$$

b. ladite autorité calcule: $\lambda = c / g^{\square} \bmod n = g^{\beta \, AB} \bmod n$

c. en utilisant un algorithme de cryptanalyse (algorithme de calcul de logarithmes discrets, éventuellement exécuté deux fois (modulo p et modulo q) afin d'en accélérer les performances), l'autorité calcule le logarithme discret $\beta$

$$\lambda = (g^{AB})^{\beta} \bmod n$$

d. ladite autorité retrouve

$$a = \alpha + \beta \, AB$$

et déchiffre les communications basées sur l'emploi de a.

Selon une autre réalisation de l'invention, le module RSA n est le produit de trois facteurs:

$$n = (Ap_A + 1) \times (Bp_B + 1) \times (Cp_c + 1)$$

dans lequel: $P_A$, $P_B$, $P_c$ sont des nombres premiers de taille supérieure à 320 bits,

$(Ap_A + 1)$, $(Bp_B + 1)$, $(Cp_c +1.)$ sont des premiers RSA, notés respectivement p, q, r,

A, B et C sont chacun le produit de k/3 nombres premiers (notés p[i], i=1 à k), les p[i] étant de taille relativement petite (entre 2 et 16 bits) et pouvant être des nombres mutuellement premiers et k étant un nombre entier compris entre 10 et 120, de telle sorte que le produit ABC ait au moins 160 bits.

Cette réalisation est intéressante pour accélérer la performance du déchiffrement. Le déchiffreur, pour accélérer ses calculs, effectue les opérations mod p mod q mod r. Si n a 640 bits, le découper en trois facteurs rend la taille des facteurs plus petite.

La présente invention est destinée à être disposée préférentiellement dans des appareils de chiffrement, déchiffrement et séquestre de clés qui sont par exemple des ordinateurs, cartes à puce, cartes PCMCIA, des badges, des cartes sans contact ou tout autre appareil portable.

La présente invention a trait aussi à un dispositif comprenant un système cryptographique caractérisé en ce qu'il comprend un système de chiffrement et/ou un système de déchiffrement et/ou un système de séquestre de clés, lesdits systèmes communiquant entre eux par un échange de signaux électroniques ou par le biais d'un échange d'ondes radio ou de signaux infrarouges.

De manière à mieux comprendre l'invention, il est nécessaire d'apporter les commentaires suivants.

Le procédé de chiffrement de l'invention se décompose en trois phases distinctes:

la génération des clés
la génération du cryptogramme
et le déchiffrement du cryptogramme.

dans la suite, nous utiliserons les conventions (typographiques) suivantes:

$\phi(n)$ notera la fonction indicatrice d'Eider.

$\phi(n)$ est définie ainsi

si $n = n_1 \times n_2 \times n_3 \times ... \times n_{k-1} \times n_k$
où $n_1 \times n_2 \times n_3 \times ... \times n_{k-1} \times n_k$ sont des nombres premiers alors:

$$\phi(n) - (n_1 - 1) \times (n_2 - 1) \times (n_3 - 1) \times ... \times (n_k - 1) \times (n_k - 1)$$

Tout d'abord et pour une bonne compréhension de l'invention, il est nécessaire de décrire la génération des clés.

Afin de générer les clés, le récepteur des cryptogrammes choisit au hasard deux groupes GA et GB d'environs k/2 petits premiers distincts p[i] (k étant un paramètre système de l'ordre de 10 à 120) et forme les deux nombres suivants (de taille approximativement égale):

A = produit des p[i] appartenant à l'ensemble $G_A$

B = produit des p[i] appartenant à l'ensemble $G_B$

Pour des raisons de sécurité il semble approprié d'imposer $G_A$ et $G_B$ tels que:

1. $G_A \cap G_B$ soit l'ensemble nul

2. Certains p[i] ne figurent pas dans $G_A \cup G_B$.

Le procédé inventif s'avère sûr (quoique d'une description quelque peu plus complexe), même si la condition 2 n'est pas satisfaite. Le procédé reste également sûr si la condition 1 n'est pas satisfaite, mais les algorithmes de génération de clés et de déchiffrement doivent être modifiés en conséquence, et deviennent notablement plus complexes. Aussi, les p[i] peuvent être non-premiers tout en étant mutuellement premiers (par exemple des puissances entières de nombres premiers de deux ou trois octets).

Pour la simplicité de l'exposé, on notera p[i], le i-eme nombre premier impair; par exemple: p[1]=3, p[2]=5, p[3]=7...

Il sera supposé dans la suite que A est simplement formé du produit des p[i] pour i de 1 à k/2, et B du produit des p[i] pour i de k/2+1 à k. Cependant, ce choix n'est pas le meilleur possible, et il doit s'interpréter uniquement comme une convention de notation.

Ensuite, le récepteur des cryptogrammes génère deux grands premiers (typiquement de l'ordre de 200 à 512 bits) notés $P_A$ et $P_B$ tels que p = A $p_A$ +1 et q = B $p_B$ + 1 soient des premiers RSA (les premiers RSA sont tels que, une fois multipliés, le produit n = p q doit être difficile à factoriser).

Pour assurer la sécurité, il apparaît préférable d'imposer aux différents paramètres des tailles minimales:

1- le produit AB doit au minimum être un nombre de l'ordre 160 bits;
2- la taille de chacun des nombres $p_A$, $p_B$ doit excéder celle du produit AB d'au moins 160 bits;
3- la taille du nombre n=p x q doit être 640 bits au moins.

La procédure de génération de tels premiers n'entre pas dans le cadre de la présente invention et s'avère évidente pour l'homme de l'art.

Finalement, le récepteur du message génère et publie un élément g d'ordre $\phi(n)/4$.

Un tel g doit impérativement vérifier la condition suivante:

Pour tout i, il n'existe pas de x tel que g = $x^{p[i]}$ mod n.

g peut être calculé à l'aide d'une des méthodes suivantes:
* première méthode de calcul de g (rapide):

Le récepteur du message génère deux entiers:

$g_{p'}$. d'ordre (p-1)/2 modulo p

$g_q$, d'ordre (q-1)/2 modulo q

Comme plus haut, la génération de gp est pratiquement équivalente à la création d'un nombre qui ne soit pas une puissance p[i]-eme pour tout i inférieur à k/2 ; de même pour $g_q$ avec les modifications évidentes :

1. fixer
   $x_0$ = 1
   $t_1$ = 1
   $t_i$ = produit des p [j] pour j allant de 1 à i-1

2. pour tout i allant de 1 à k/2
   prendre un x aléatoire
   élever x à la puissance $t_i$
   si $x^{(p-1)/p[i]}$ = 1
         essayer un autre x
   sinon
   calculer $x_i$ = x $(x_{i-1})^{p[i]}$

3. fixer $g_P$ = $x_{k/2}$

4. fixer
   $x_0$ = 1
   $t_1$ = 1
   $t_i$ = produit des p[j] pour j allant de 1 à i-1

5. pour tout i allant de 1 à k/2
   prendre un x aléatoire
   élever x à la puissance $t_i$
   si $x^{(q-1)/p[i]}$ = 1
         essayer un autre x
   sinon
   calculer $x_i$ = $x(x_{i-1})^{p[i]}$

6. fixer $g_q$ = $x_k$

7. construire g à partir de $g_p$ et $g_y$ en appliquant la méthode des restes chinois (notée TRC dans la suite de la description), méthode décrite dans l'ouvrage « *A course in number theory and cryptography* », par Neal Koblitz, seconde Editions, Editions Springer-Verlag. Il peut être nécessaire d'élever au carré le nombre produit pour obtenir finalement g.

On montre (le détail d'une telle preuve n'est pas nécessaire pour la compréhension de la présente invention) que chaque étape de l'algorithme détermine un élément qui n'est pas une puissance p[j]-eme pour j inférieur ou égal à i.

* seconde méthode de calcul de g (simple)

Une approche alternative consiste à choisir g aléatoirement et tester qu'un tel g. n'est pas une puissance p[j]-eme modulo n. Un calcul précis montre que (en moyenne), un tel g sera trouvé au bout de ln(k) tirages aléatoires (soit pour k = 120 environs une chance sur cinq).

De manière à bien comprendre l'invention, il est maintenant nécessaire de décrire la génération du cryptogramme.

Le cryptogramme c d'un message inférieur au produit AB est calculé par la formule:

$$c = g^m \bmod n.$$

La description de l'invention s'oriente maintenant vers une description du déchiffrement du cryptogramme.

Afin de retrouver m, le déchiffreur effectue les opérations suivantes:

① calculer pour i allant de 1 à k: $y[i] = c^{\phi(n)/p[i]} \bmod n$
Soit $m[i] = m \bmod p[i]$ et $m' = (m - m[i])/p[i]$
Par substitution, il est aisé de voir que :

$$y[i] = c^{\phi(n)/p[i]} \bmod n$$

$$= g^{m\phi(n)/p[i]} \bmod n$$

$$= g^{(m[i]+m'p[i])\,\phi(n)/p[i]} \bmod n$$

$$= g^{m[i]\phi(n)/p[i]} g^{m'\phi(n)} \bmod n$$

$$= g^{m[i]\phi(n)/p[i]} \bmod n$$

②

pour i allant de 1 à k faire:
pour j allant de 1 à p[i] faire:
si $g^{j\phi(n)/p[i]} \bmod n = y[i]$ affecter $m_i = j$

③ retrouver
$m = TRC(m_1, m_2, ..., m_k$

L'algorithme de déchiffrement peut être amélioré de diverses façons:

Typiquement, il est possible de pre-calculer et tabler les valeurs $g^{j\phi(n)/p[i]} \bmod n$ pour toutes les valeurs des variables i et j nécessaires au déroulement du déchiffrement. Aussi, une telle table peut être tronquée ou hachée pourvu que la méthode de troncature ou hachage (noté h)assure que :

$$h_{\llcorner} g^{j\phi(n)/p[i]} \bmod n_{\lrcorner} \neq h_{\llcorner}{}^{j'\phi(n)/p[i]} \bmod n_{\lrcorner} \text{ si } j \neq j'$$

Avec une telle réalisation, il s'avère possible de déchiffrer des messages de 20 octets avec k = 30 (le produit AB fait alors 160 bits, un module n de 80 octets et une table de 4 kilo-octets).

Comme mentionné dans la partie « génération de clés », il peut être plus judicieux de choisir 16 premiers de 10 bits, au lieu des 30 premiers p [i] (k vaut alors 16). Comme il existe 75 tels premiers, il y a environ 252,9 choix possibles. il n'est pas nécessaire de publier les premiers choisis, bien que cela n'ajoute pas de sécurité supplémentaire.

Il est même possible de choisir des nombres mutuellement premiers; par exemple, des puissances de nombres premiers, ce qui augmente encore l'éventail de choix de ces paramètres.

Une seconde réalisation permet d'accélérer le déchiffrement en calculant, dès réception du cryptogramme, la quantité:

$z = c' \bmod n$, où $r = p_A p_B$

Les quantités y[i] peuvent alors être calculées plus facilement en empruntant le raccourci de calcul suivant

$y[i] = z^{AB/p[i]} \bmod n$ profitant ainsi de la différence de taille entre AB/p[i] et $\phi(n)/p[i]$ qui accélère l'exponentiation.

Une troisième réalisation permet d'accélérer le déchiffrement en déchiffrant séparément le message modulo p puis modulo q (p et q étant de la moitié de la taille de n, le déchiffrement sera deux fois plus rapide) et en composant les résultats modulo $\phi(n)$.

l
Cette méthode de déchiffrement alternatif se décrit ainsi:

① calculer pour i allant de 1 à k/2 : $y[i] = c^{\phi(p)/p[i]} \bmod p$
Soit $m[i] = m \bmod p[i]$ et $m' = (m - m[i])/p[i]$
Par substitution, il est aisé de voir que:

$$y[i] = c^{\phi(p)/p[i]} \bmod p$$

$$= g^{m\phi(p)/p[i]} \bmod p$$

$$= g^{(m[i]+m'p[i])\phi(p)/p[i]} \bmod p$$

$$= g^{m[i]\phi(p)/p[i]} g^{m'\phi(p)} \bmod p$$

$$= g^{m[i]\phi(p)/p[i]} \bmod p$$

②

pour i allant de 1 à k/2 faire:
pour j allant de 1 à p[i] faire:
si $g^{j\phi(p)/p[i]} \bmod p = y[i]$ affecter $\mu[i] = j$

③ retrouver :

m mod $\phi(p)$ = TRC($\mu$[1.]mod p[1],...,$\mu$[k/2.]mod p[k/2])

④ refaire les étapes {①, ②, ③ } avec q à la place de p.

⑤ calculer m = TRC(m mod $\phi(p)$, m mod $\phi(q)$)

Il peut s'avérer nécessaire de protéger le message m contre la manipulation en chiffrant par la méthode proposée dans la présente invention, f(clé, m) dans laquelle f est une fonction de chiffrement symétrique (par exemple l'algorithme DES) dont le paramètre «clé» est accessible à tous. Alternativement, la méthode de chiffrement peut vérifier que le message m obtenu est bien tel que son chiffré soit c. Une autre façon de protéger m peut être le chiffrement, par la méthode proposée, de m|hash(m), (c'est à dure c=$g^{m|hash(m)}$ mod n) ou hash(m) est un hachage du message m, et | représente la concaténation (dans ce cas, le déchiffrement vérifie l'intégrité du message obtenu par calcul de son haché).

Il est possible d'étendre le système de chiffrement ci-dessus décrit au cas où le module n ne se compose plus de deux, mais de trois facteurs. On aura alors:

$$n=pqr$$

avec p=Ap$_A$+1, q=Bp$_B$+1, r=Cp$_P$+1, p$_A$, p$_B$, p$_C$ sont trois grands premiers (de 200 à 512 bits), et A, B, C sont chacun le produit des petits premiers impairs distincts, provenant d'ensembles G$_A$, G$_B$, G$_C$.

Les modifications à apporter sont évidentes à l'homme de l'art.

De plus, il apparaît possible de relaxer légèrement la condition 2 de la partie descriptive précédente sur la génération des clés (qui s'énonce ici : « certains p(i) ne figurent pas dans G$_A\cup$ G$_B\cup$G$_C$ »). C'est ainsi qu'un jeu de paramètres où n a 640 bits, le produit ABC a 160 bits, et chacun des p[i] a corrélativement 160 bits, assure une sécurité appropriée.

La présente invention a pour second objet de décrire un système de séquestre de clés améliorant le procédé décrit par Y. Desmedt dans « *Securing the traceability of ciphertexts - Towards a secure software key escrow system* » (Proceedings o Eurocrypt'95, Lecture Notes in Computer Science 921) et complété par les observation formulées par L. Knudsen et T. Pedersen dans l'article « *On the difficulty of software key escrow »* (Proceedings of Eurocrypt'96, Lecure Notes in Computer Science 1070).

Afin d'améliorer notablement la fonction de séquestre de clés proposée par Y. Desmedt, nous considérons une variante de la méthode de chiffrement:

Soit ID, l'identité de chaque utilisateur, codée de manière binaire;

$$ID= \Sigma 2^{i+1}\ ID[i]$$

où ID[i] sont les bits de l'identité d'un utilisateur du système de séquestre de clés (la somme étant prise pour i allant de 1 à k) et soit e(ID) = $\Pi$p[i]$^{ID[i]}$ (le produit étant pris pour i allant de 1 à k).

Soit enfin c = $g^{e(ID)u}$ mod n où u est un grand premier aléatoire,

c est donné à l'utilisateur comme base d'exponentiation pour chiffrement El-Gamal. L'utilisateur dérive de c sa clé publique El-Gamal en choisissant un aléa x et en élevant c à puissance x modulo n.

Afin de tracer l'utilisateur, ledit centre de séquestre de clés extrait du cryptogramme El-Gamal de l'utilisateur la partie:

$$v=c^r modn$$

où r est l'aléa de chiffrement choisi par l'utilisateur.

Connaissant $\phi(n)$, ledit centre retrouve les bits ID[i] par l'algorithme suivant:

① calculer po B+ur i allant de 1 à k: y[i] = $v^{\phi(n)/p[i]}$ mod n

②

pour i allant de 1 à k faire:
pour j allant de 1 à p [i] faire:

si y[i]=1 affecter $\mu$[i] à 1, sinon affecter p[i] à 0

③ calculer
ID' = $\Sigma 2^{i-1}\ \mu$[i]

④ retrouver: ID = CCE(ID')

où CCE note un mécanisme de correction d'erreurs (du type de ceux décrits dans l'ouvrage « Codes Correcteurs, Théorie et Pratique » par A. Poli et L. Huguet, Editions Masson) destiné à corriger les perturbations introduites dans le cas d'une utilisation illicite d'un r composite. Le mécanisme de correction peut être omis; l'algorithme permettant de suivre à la trace l'utilisateur devra alors subir des modifications évidentes à l'homme de l'art, et utiliser plusieurs quantités analogues à c$^r$ mod n, correspondant à plusieurs exécutions de l'algorithme de chiffrement d'El Gamal.

La présente invention a pour troisième objet de présenter un second système de, séquestre de clés basé sur le mécanisme d'échange de clés dit de Diffie-Hellman, mécanisme breveté sous la référence US 4,200,770.

Dans un tel système, un nombre c, obtenu en élevant g à une puissance aléatoire a modulo n par l'une des parties est intercepté par l'autorité de séquestre.

$$c = g^{\alpha} \bmod n$$

Ladite autorité de séquestre retrouve a de la façon suivante:

1. Connaissant la factorisation de n, l'autorité retrouve, à l'aide de l'algorithme de déchiffrement la valeur

$$\alpha = a \bmod AB$$

soit

$$a = \alpha + \beta\, AB.$$

2. L'autorité calcule :

$$\lambda. = c/g^{\alpha} \bmod n = g^{\beta AB} \bmod n$$

(puisque $c = g^a \bmod n = g^{\alpha + \beta AB} \bmod n = g^{\alpha} g^{\beta AB} \bmod n$)

3. En utilisant un algorithme de cryptanalyse (algorithme de calcul de logarithmes discrets, éventuellement exécuté deux fois (modulo p et modulo q) afin d'en accélérer les performances), l'autorité calcule le logarithme discret β.
$$\lambda = g^{AB})^{\square} \bmod n$$

4. L'autorité retrouve

$$a = \alpha + \beta AB$$

et déchiffre les communications basées sur l'emploi de a.

La réalisation de l'invention sera mieux comprise à la lecture de la description et des dessins qui vont suivre; sur les dessins annexés:

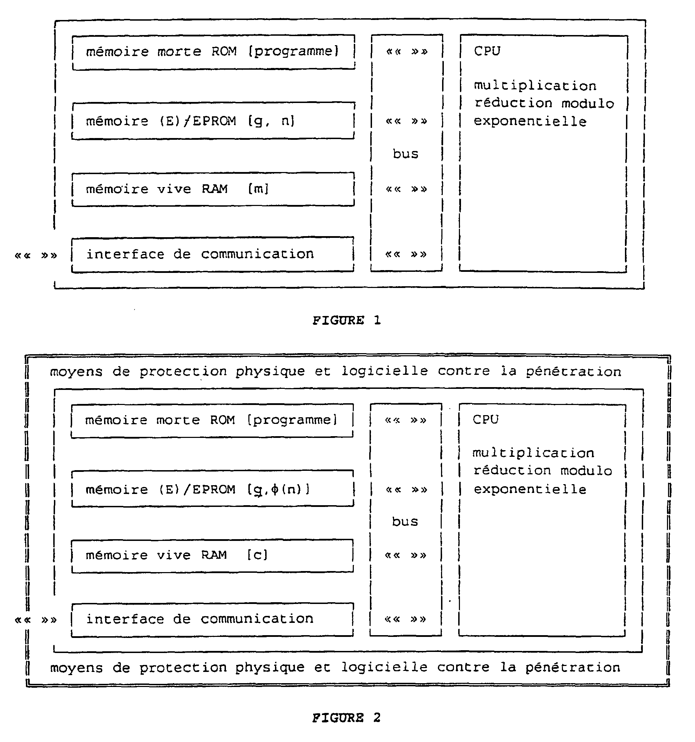

- la figure 1 représente l'organigramme d'un système chiffrant mettant en oeuvre le système proposé par la présente invention.
- la figure 2 représente l'organigramme d'un système déchiffrant mettant en oeuvre le système proposé par la présente invention.

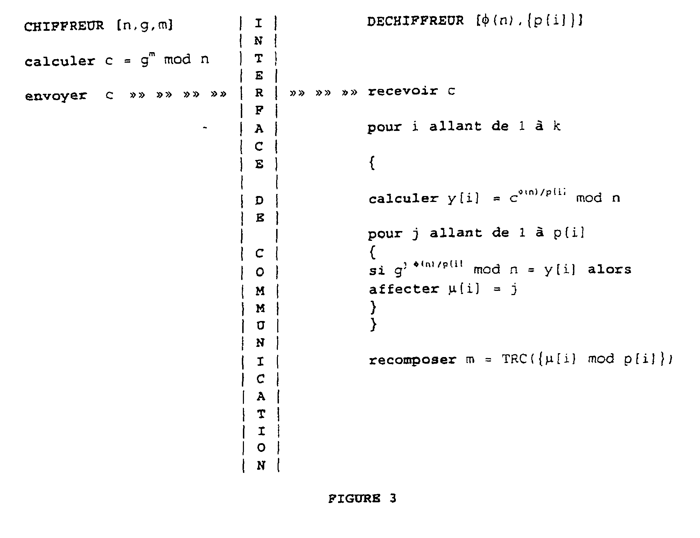

- la figure 3 représente les données transmises entre le système chiffrant et le système déchiffrant pendant la transmission sécurisée d'un message m.

Selon l'invention proposée, chaque appareil de chiffrement (typiquement un ordinateur ou une carte à puce) se compose d'une unité de traitement (CPU), d'une interface de communication, une mémoire vive (RAM) et/ou une mémoire non inscriptible (ROM) et/ou une mémoire inscriptible (généralement ré inscriptible) (disque dur, disquette, EPROM ou EEPROM).

Le CPU et/ou la ROM de l'appareil de chiffrement contiennent des programmes ou des ressources de calcul correspondant aux règles de génération du cryptogramme (multiplication, mise au carré et réduction modulaire). Certaines de ces opérations peuvent être regroupées (par exemple, la réduction modulaire peut-être directement intégrée dans la multiplication).

De même que pour l'implémentation du RSA, la RANI contient typiquement le message m sur lequel s'applique le chiffrement et les règles de calcul pour la génération du cryptogramme. Les disques, l'E(E)PROM contiennent au moins les paramètres n et g générés et utilisés comme précisé dans la description qui suit.

Le CPU commande, via les bus d'adresse et de données, l'interface de communication, les opérations de lecture et d'écriture mémoire.

Chaque appareil de déchiffrement (identique à l'appareil de séquestre de clés) est nécessairement protégé du monde extérieur par des protections physiques ou logicielles. Ces protections devraient être suffisantes pour empêcher toute entité non autorisée d'obtenir la clef secrète constituée des facteurs secrets de n. Les techniques les plus utilisées de nos jours en la matière sont l'intégration de la puce dans un module de sécurité et l'équipement des puces de dispositifs capables de détecter des variations de température; de lumière ainsi que des tensions et des fréquences d'horloge anormales. Des techniques de conception particulières telles que l'embrouillage de l'accès mémoire sont également utilisées.

Selon l'invention proposée, l'appareil de déchiffrement se compose au minimum d'une unité de traitement (CPU) et de ressources mémoires (RAM, ROM, EEPROM ou disques).

Le CPU commande, via les bus d'adresse et de données, l'interface de communication, les opération de lecture et d'écriture mémoire. La RAM, EEPROM ou disques contiennent le paramètre $\phi(n)$ ou, au moins, le facteurs de $\phi(n)$.

Le CPU et/ou la ROM de l'appareil de déchiffrement contiennent des programmes ou des ressources de calcul permettant d'implémenter les diverses étapes du processus de déchiffrement décrites précédemment (multiplication, exponentiation et réduction modulaire). Certaines de ces opérations peuvent être regroupées (par exemple, la réduction modulaire peut-être directement intégrée dans la multiplication).

Dans le cadre général de l'invention proposée, un chiffrement du message m est réalisée en échangeant entre la carte, l'appareil de signature et l'appareil de vérification au moins la donnée c.

## Revendications

1. Système cryptographique comprenant au moins un système de chiffrement-déchiffrement associant les principes dits du logarithme discret et de la factorisation, comprenant entre autres des clés publiques et une clé secrète, **caractérisé en ce que** lesdites clés publiques comprennent, au moins

   a. un module RSA n, de taille supérieure à 640 bits, ayant la propriété suivante :

   $$n= (A\,p_A+1)X(Bp_B+1)$$

   dans laquelle:

   $p_A$ et $p_B$ sont des nombres premiers de taille supérieure à 320 bits.
   $(A\,p_A + .1)$ est un premier RSA noté p,
   $(B\,p_B + 1)$ est un premier RSA noté q,
   A est le produit de k/2, k étant un nombre entier pair compris entre 10 et 120 nombres premiers notés p[i], i=1 à k/2 de taille relativement petite entre 2 et 16 bits et
   B est le produit de k/2 nombres premiers, notés encore p[i], i=k/2+1 à k;
   les p[i] étant de taille relativement petite, entre 2 et 16 bits, et pouvant également être mutuellement premiers;

   b. une base d'exponentiation g, d'ordre $\phi(n)/4$, où $\phi(n)$ note la fonction indicatrice d'Euler, g ne devant donc pas être une puissance p[i]-eme modulo n d'aucun nombre.

2. Système cryptographique selon la revendication 1 comprenant au moins un système de chiffrement-déchiffrement 1 **caractérisé en ce que**:
   le chiffrement d'un message m, m<AB, consiste en l'opération:
   $c= g^m \bmod n$
   où c note le cryptogramme (message chiffré).

3. Système cryptographique selon la revendication 2 comprenant un système de chiffrement-déchiffrement **caractérisé en ce que** l'intégrité de m peut être assurée par le chiffrement de m|h(m), h dénotant une fonction de hachage et | la concaténation, ou par le chiffrement de DES(clé, m), ladite clé étant une clé accessible à tous.

4. Système cryptographique selon la revendication 1 comprenant un système de chiffrement-déchiffrement et un système de séquestre de clés **caractérisé en ce que** :

   ladite clé secrète du déchiffreur ou du centre de séquestre est le nombre $\phi(n)$ et **en ce que** l'opération de déchiffrement ou de recouvrement de l'identité d'un utilisateur consiste en les étapes suivantes:

   a. calculer pour i allant de 1 à k: $y[i] = c^{\phi(n)/p[i]} \bmod n$;

   b. pour i allant de 1 à k
   pour j allant de 1 à p[i]
   comparer y[i] aux valeurs $g^{j\phi(n)/p[i]} \bmod n$ indépendantes de m;
   si $g^{j\phi(n)p[i]} \bmod n = y[i]$ alors affecter $\mu[i] = j$

   c. recomposer le message m à partir du théorème des restes chinois TRC et des valeurs $\mu[i]$.

5. Système cryptographique selon la revendication 4 ou 5 comprenant un système de chiffrement-déchiffrement et un système de séquestre de clés **caractérisé en ce que** ledit déchiffreur accélère le calcul des quantités y[i] en calculant :

   a)$z=c^r \bmod n$.où $r=p_A\,p_B$

   b) pour i allant de 1 à k: $y[i] = z^{AB/p[i]} \bmod n$,

   de manière à profiter de la différence de taille entre AB/p[i]) et $\phi(n)/p[i]$ pour accélérer les calculs.
   i

6. Système cryptographique selon la revendication 4 comprenant un système de chiffrement-déchiffrement et un système de séquestre de clés ou 5 **caractérisé en ce que** le déchiffreur pré-calcule et sauvegarde, une fois pour toutes, la table des valeurs $g^{j\phi(n)/p[i]} \bmod n$ pour $1 \le i \le k$ et $1 \le j \le p[i]$
   ou,
   plus spécifiquement une troncature ou un hachage de ces valeurs (noté h) ayant la propriété suivante :

   $$h(g^{j\phi(n)/p[i]} \bmod n) \ne h(g^{j'\phi(n)/p[i]} \bmod n) \text{ si } j \ne j'$$

7. Système cryptographique selon l'une quelconque des revendications 4 à 6 comprenant un système de chiffrement-déchiffrement et un système séquestre de clés **caractérisé en ce que** le déchiffreur accélère ses calculs en déchiffrant séparément le message modulo p puis modulo q et en composant les résultats modulo à l'aide du théorème des restes Chinois afin de retrouver m.

**8.** Système cryptographique selon l'une quelconque des revendications 4 à 7 **caractérisé en ce qu'**une autorité ou centre de séquestre des clés réalise les étapes suivantes :

a. elle code l'identité de l'utilisateur ID = $\Sigma\, 2^{i+1}$ ID[i] où ID[i] sont les bits de l'identité dudit utilisateur du système (la somme étant prise pour i allant de 1 à k) en calculant e(ID) = $\Pi p[i]^{ID[i]}$(le produit étant pris pour i allant de 1 à k);

b. elle délivre à l'utilisateur une clé ( c'est à dire une base d'exponentiation) El-Gamal c = $g^{e(ID)u}$ mod n,
dans laquelle u est un grand premier aléatoire ou un nombre premier avec $\phi(n)$;

c. elle rend ainsi possible à l'utilisateur de dériver de c sa clé publique El-Gamal en choisissant un aléa x et en élevant c à la puissance x modulo n.

d. dans le but de retrouver la trace de l'utilisateur, l'autorité extrait du cryptogramme El-Gamal du chiffreur, ledit cryptogramme comprenant toujours deux parties, la partie:
v=c' mod n

où r est l'aléa de chiffrement choisi par le chiffreur.

e. Connaissant $\phi(n)$, ladite autorité retrouve les bits ID[i] par l'algorithme suivant:

① calculer pour i allant de 1 à k: $y[i] = v^{\phi(n)/p[i]}$ mod n

② si y[i]=1, alors $\square$[i]=1, sinon $\mu[i] = 0$

③ calculer
ID'=$\Sigma 2^{i-1}\mu[i]$

④ retrouver: ID = CCE(ID')

dans lequel CCE note un mécanisme de corrections d'erreurs.

**9.** Système cryptographique selon l'une quelconque des revendications 4 à 7 comprenant un système de séquestre de clés **caractérisé en ce qu'**il est basé sur le mécanisme d'échange de clés dit de Diffie-Hellman où un nombre c, obtenu en élevant g à une puissance aléatoire a modulo n par l'une des parties, est intercepté par ladite autorité de séquestre.

c-$g^a$ mod n

ladite autorité de séquestre retrouve a de la façon suivante :

a. connaissant la factorisation de n, ladite autorité retrouve, à l'aide de l'algorithme de déchiffrement, la valeur

$$a= \alpha \text{ mod } AB$$

soit

$$a=\alpha+\beta AB;$$

b. ladite autorité calcule: $\lambda$ = c / $g^\alpha$ mod n = $g^\beta$ A B mod n

c. en utilisant un algorithme de cryptanalyse l'autorité calcule le logarithme discret $\beta$

$$\lambda = (g^{AB})^\beta \text{ mod n}$$

d. L'autorité retrouve

$$a=\alpha+\beta \text{ AB}$$

et déchiffre les communications basées sur l'emploi de a.

**10.** Système cryptographique selon l'une quelconque des revendications 2 à 9 comprenant un système de chiffrement-déchiffrement et un système de séquestre de clés **caractérisé en ce que** le module RSA n est le produit de trois facteurs:

$$n=(Ap_A + 1)x(Bp_B + 1)x(Cp_C + 1)$$

dans lequel: $P_A$, $P_B$, $P_C$ sont des nombres premiers de taille supérieure à 320 bits,
$(Ap_A + 1)$, $(Bp_B + 1)$, $(Cp_C +1)$ sont des premiers RSA, notés respectivement p, q, r,
A, B et C sont chacun le produit de k/3 nombres premiers (notés p[i], i=1 à k), les p[i] étant de taille relativement petite (entre 2 et 16 bits) et pouvant être des nombres mutuellement premiers et k étant un nombre entier compris entre 10 et 120, de telle sorte que le produit ABC ait au moins 160 bits.

**11.** Système cryptographique selon l'une quelconque des revendications 1 à 10 comprenant un système de chiffrement-déchiffrement ou de séquestre **ca-**

**ractérisé en ce que** les appareils de chiffrement, déchiffrement et séquestre de clés sont des ordinateurs, cartes à puce, cartes PCMCIA, des badges, des cartes sans contact ou tout autre appareil portable.

**12.** Dispositif comprenant un système " cryptographique selon l'une quelconque des revendications précédentes **caractérisé en ce qu'**il comprend un système de chiffrement et/ou un système de déchiffrement et/ou un système de séquestre de clés, lesdits systèmes communiquant entre eux par un échange de signaux électroniques ou par le biais d'un échange d'ondes radio ou de signaux infrarouges.

**Claims**

**1.** A cryptographic system comprising at least one enciphering/deciphering system combining the so-called discrete logarithm and factorisation principles, comprising amongst other things public keys and a secret key, **characterised in that** the said public keys comprise at least

a. an RSA n module, with a size greater than 640 bits, having the following property:

$$n- (A\, p_A +1) \times (Bp_a +1)$$

in which:

$p_A$ and $p_B$ are prime numbers with a size greater than 320 bits

$(A\, p_A + 1)$ is an RSA prime denoted p,

$(B\, p_B + 1)$ is an RSA prime denoted q,

A is the product of k/2, k being an even integer number between 10 and 120 prime numbers denoted p[i], i-1 to k/2 of relatively small size between 2 and 16 bits, and

B is the product of k/2 prime numbers, also denoted p[i], i=k/2+1 to k;

the p[i] values being of relatively small size, between 2 and 16 bits, and also being able to be mutually prime;

b. An exponentiation base g, of order $\phi(n)/4$,

where $\phi(n)$ denotes the Euler indicator function, g therefore not having to be a p[i]$^{th}$ modulo n power of any number.

**2.** A cryptographic system according to Claim 1, comprising at least one enciphering/deciphering system 1 **characterised in that**:

the enciphering of a message m, m<AB, consists of the operation:
$$c=g^m \bmod n$$

where c denotes the cryptogram (the enciphered message).

**3.** A cryptographic system according to Claim 2, comprising an enciphering/deciphering system **characterised in that** the integrity of m can be ensured by the enciphering of m|h(m), h denoting the hash function and | the concatenation, or by the enciphering of DES (key, m) , the said key being a key accessible to all.

**4.** A cryptographic system according to Claim 1, comprising an enciphering/deciphering system and a key sequestration system **characterised in that**:

the said secret key of the decipherer or of the sequestration centre is the number $\phi(n)$ and **in that** the operation of deciphering or recovering of the identity of a user consists of the following steps:

a) calculating for i ranging from 1 to k: $y[i] = c^{\phi(n)/p[i]} \bmod n$;
b) for i ranging from 1 to k
for j ranging from 1 to p[i]
comparing y[i] with the values $g^{j\phi(n)/p[i]} \bmod n$ independent of m;
if $g^{j\phi(n)/p[i]} \bmod n = y[i]$ then allocating $\mu[i]=j$
c) recomposing the message m using the Chinese remainder theorem CRT and the $\mu[i]$ values.

**5.** A cryptographic system according to Claim 4 or 5, comprising an enciphering/deciphering system and a key sequestration system **characterised in that** the said decipherer accelerates the calculation of the quantities y[i] by calculating:

a) $z=c^r \bmod n.$where $r=p_A\, p_B$
b) for i ranging from 1 to k: $y[i] = z^{AB/p[i]} \bmod n$,

so as to take advantage of the difference in size between AB/p[i] and $\phi(n)/p[i]$ in order to accelerate the calculations.

**6.** A cryptographic system according to Claim 4, comprising an enciphering/deciphering system and a key sequestration system according to Claim 4 or 5, **characterised in that** the decipherer pre-calculates and saves, once and for all, the table of values

$g^{j\phi(n)/p[i]} \bmod n$ for $1 \le i \le k$ and $1 \le j \le p[i]$

 or,

  more specifically a truncation or hashing of these values (denoted h) having the following property:

$$h(g^{j\phi(n)/p[i]} \bmod n) \ne h(g^{j'\phi(n)/p[i]} \bmod n) \text{ if } j \ne j'.$$

**7.** A cryptographic system according to any one of Claims 4 to 6, comprising an enciphering/deciphering system and a key sequestration system **characterised in that** the decipherer accelerates its calculations by separately deciphering the message modulo p and then modulo q and composing the results modulo by means of the Chinese remainder theorem in order to find m.

**8.** A cryptographic system according to any one of Claims 4 to 7, **characterised in that** a key sequestration centre or authority performs the following steps:

 a. it codes the identity of the user ID = $\sum 2^{i+1}$ ID[i] where ID[i] are the bits of the identity of the said user of the system (the sum being taken for i ranging from 1 to k) by calculating e(ID) = $\Pi p[i]^{ID[i]}$ (the product being taken for i ranging from 1 to k);

 b. it delivers to the user an El-Gamal key (that is to say an exponentiation base) c = $g^{e(ID)u}$ mod n,
  in which u is a random large prime number or a prime number with $\phi(n)$ ;

 c. it thus enables the user to derive his El-Gamal public key from c by choosing a random value x and raising c to the power x modulo n;

 d. for the purpose of finding the trace of the user, the authority extracts from the El-Gamal cryptogram of the encipherer the said cryptogram always comprising two parts, the part:
  v=c' mod n
  where r is the random enciphering value chosen by the encipherer;

 e. knowing $\phi(n)$, the said authority finds the bits ID[i] by means of the following algorithm:

  ① calculating for i ranging from 1 to k: y [i] = $v^{\phi(n)/p[i]}$ mod n

  ② if y[i] = 1, then $\Box$[i] = 1, otherwise $\mu$[i] = 0

  ③ calculating
   ID' = $\Sigma 2^{i-1} \mu$[i]

  ④ finding: ID = CCE(ID')

   in which CCE denotes an error correction mechanism.

**9.** A cryptographic system according to any one of Claims 4 to 7, comprising a key sequestration system **characterised in that** it is based on the so-called Diffie-Hellman key exchange system where a number c, obtained by raising g to a random power a modulo n by one of the parts, is intercepted by the said sequestration authority

$$c\text{-}g^a \bmod n$$

 the said sequestration authority finds a in the following manner:

 a. knowing the factorisation of n, the said authority finds, by means of the deciphering algorithm, the value

$$a = \alpha \bmod AB$$

  that is to say

$$a = \alpha + \beta AB;$$

 b. the said authority calculates: $\lambda = c/g^\alpha$ mod n = $g^\beta$ A B mod n

 c. using a cryptanalysis algorithm the authority calculates the discrete logarithm $\beta$

$$\lambda = (g^{AB})^\beta \bmod {}^n$$

 d. the authority finds

$$a = \alpha + \beta AB$$

  and deciphers the communications based on the use of a.

**10.** A cryptographic system according to any one of Claims 2 to 9, comprising an enciphering/deciphering system and a key sequestration system **characterised in that** the RSA modulus n is the product of three factors:

$$n=(Ap_A + 1)x(Bp_B + 1)x(Cp_C + 1)$$

 in which: $P_A$, $P_B$, $P_C$ are prime numbers with a size greater than 320 bits,

(Ap$_A$ + 1), (Bp$_B$ + 1), (Cp$_C$ +1) are RSA primes, denoted respectively p, q, r,

A, B and C are each the product of k/3 prime numbers (denoted p[i], i=1 to k), the p[i] quantities being of relatively small size (between 2 and 16 bits) and being able to be mutually prime numbers and k being an integer number between 10 and 120, so that the product ABC has at least 160 bits.

11. A cryptographic system according to any one of Claims 1 to 10, comprising an enciphering/deciphering or sequestration system **characterised in that** the enciphering/deciphering and key sequestration apparatus are computers, smart cards, PCMCIA cards, badges, contactless cards or any other portable appliance.

12. A device comprising a cryptographic system according to any one of the preceding claims, **characterised in that** it comprises an enciphering system and/or a deciphering system and/or a key sequestration system, the said systems communicating with each other by means of an exchange of electronic signals or by means of a radio wave or infrared signal exchange.

**Patentansprüche**

1. Kryptographisches System mit wenigstens einem die Prinzipien des sogenannten diskreten Logarithmus und der Faktorisierung verbindenden Verschlüsselungs-Entschlüsselungs-System, mit darüber hinaus öffentlichen Schlüsseln und einem geheimen Schlüssel, **dadurch gekennzeichnet, dass** die genannten öffentlichen Schlüssel wenigstens Folgendes umfassen:

a. ein Modul RSA n mit einer Größe von über 640 Bit mit folgender Eigenschaft:

$$n = (A_{PA} + 1) \times (B_{Pa} + 1)$$

in der:

P$_A$ und P$_a$ Primzahlen mit einer Größe von über 320 Bit sind
(A$_{pA}$ + 1) eine erste, mit P bezeichnete RSA ist
(B$_{Pa}$ + 1) eine erste, mit q bezeichnete RSA ist,
A das Produkt aus k/2 ist, wobei k eine zwischen 10 und 120 inbegriffene ganze gerade Zahl ist, mit p[i], i = l bis k/2 bezeichnete Primzahlen mit relativ kleiner Größe zwischen 2 und 16 Bit und

B das Produkt von k/2, mit p [i] , i = k/2 + 1 bis k bezeichnete Primzahlen ist

Wobei die p[i] von relativ kleiner Größe zwischen 2 und 16 Bit sind und ebenfalls gegenseitig Primzahlen sein können;

b. eine Exponentierungsbasis g in der Größenordnung von Φ(n) , in der Φ(n) die Indikationsfunktion Euler bezeichnet, wobei g daher keine Potenz p[i] Modulo n irgendeiner Zahl sein darf.

2. Kryptographisches System gemäß Anspruch 1, mit wenigstens einem Verschlüsselungs-Entschlüsselungs-System 1, **dadurch gekennzeichnet, dass**:
die Verschlüsselung einer Meldung m, m < A, aus folgender Operation besteht:
c = g$^m$ m n
in der c das Kryptogramm (verschlüsselte Meldung) bezeichnet.

3. Kryptographisches System gemäß Anspruch 2, mit einem Verschlüsselungs-Entschlüsselungs-System, **dadurch gekennzeichnet, dass** die Ganzzahligkeit von m durch die Verschlüsselung von m/h (m) gewährleistet werden kann, wobei h auf eine Zerlegungsfunktion und die Verkettung schließen lässt, oder durch die Verschlüsselung von DES (Schlüssel, m), wobei der genannte Schlüssel ein für alle zugänglicher Schlüssel ist.

4. Kryptographisches System gemäß Anspruch 1 mit einem Verschlüsselungs-Entschlüsselungs-System und einem Schlüssel-Sequestersystem, **dadurch gekennzeichnet, dass**:

Der genannte Geheimschlüssel der Entschlüsselung oder des Sequesterzentrums die Zahl Φ(n) ist und dass die Entschlüsselungsoperation oder der Abdeckung der Identität eines Anwenders aus den drei folgenden Stufen besteht:

a. Berechnung für i von 1 bis k : y[i] = c$^{Φ(n)/p[i]}$ mod n;

b. für i von 1 bis k
für j von 1 bis p[i]
Vergleichen von y[i] mit den Werten g$^{jΦ(n)/p[i]}$ mod n, unabhängig von m;
wenn g$^{jΦ(n)/p[i]}$ mod n = y[i], dann wird μ[i] = j zugeordnet.

c. Wiederherstellung der Nachricht m ausgehend vom Lehrsatz der chinesischen Reste TRC und der Werte μ[i].

5. Kryptographisches System gemäß Anspruch 4 oder 5 mit einem Verschlüsselungs-Entschlüsselungs-System und einem Schlüssel-Sequestersystem, **dadurch gekennzeichnet, dass** die genannte Entschlüsselung die Berechnung der Mengen y [i] durch folgende Berechnung beschleunigt:

a) $z = c'$ mod n, wobei $r = P_A P_B$ ist
b) für i, das von 1 bis k : $y[i] = z^{AB/p[i]}$ mod n reicht;

so dass der Größenunterschied zwischen AB/p[i] und $\Phi(n)/p[i]$ zur Beschleunigung der Berechnungen ausgenutzt wird.

6. Kryptographisches System gemäß Anspruch 4 mit einem Verschlüsselungs-Entschlüsselungs-System und einem Schlüssel-Sequestersystem oder gemäß Anspruch 5, **dadurch gekennzeichnet, dass** die Entschlüsselung ein für alle Mal die Wertetabelle $g^{j\Phi(n)/p[i]}$ mod n für $1 \leq i \leq k$ und $1 \leq j \leq p[i]$ vorausberechnet und speichert.
oder
ganz spezifisch ein Abkürzen oder ein Zerlegen dieser (mit h bezeichneter) Werte mit folgenden Eigenschaften:
$h (g^{j\Phi(n)/p[i]}$ mod n$) \neq h (g^{j\Phi(n)/p[i]}$ mod n$)$ , wenn j # j' ist.

7. Kryptographisches System gemäß Anspruch 4 bis 6 mit einem Entschlüsselungs-Verschlüsselungs-System und einem Schlüssel-Sequestersystem, **dadurch gekennzeichnet, dass** die Entschlüsselung ihre Berechnungen durch separates Entschlüsseln der Modulo-Meldung p, dann des Modulo q und durch Zusammenstellen der Ergebnisse Modulo mit Hilfe des Lehrsatzes der chinesischen Reste beschleunigt, um zu m zu gelangen.

8. Kryptographisches System gemäß Anspruch 4 bis 7, **dadurch gekennzeichnet, dass** eine Autorität oder ein Schlüssel-Sequesterzentrum die folgenden Stufen realisiert:

a. Sie kodiert die Identität des Anwenders ID = $\Sigma 2^{[+]}$ ID[i], wobei ID [i] die Bits der Identität des genannten Anwenders des Systems sind (wobei die Summe gewählt wird, wobei i von 1 bis k reicht), durch Berechnung von $e(ID) = \Pi p [i]^{ID[i]}$ (wobei das Produkt gewählt wird, wobei 1 von 1 bis k reicht).

b. Sie liefert dem Anwender einen Schlüssel (das heißt, eine Exponentierungsbasis) El-Gamal $c = g^{e(ID)a}$ mod n,
in dem u eine zufällige große Primzahl oder eine Primzahl mit $\Phi(n)$ ist;

c. Sie ermöglicht es dem Anwender somit, aus c seinen öffentlichen Schlüssel El-Gamal durch Auswahl eines Zufalls x und durch Potenzieren von c hoch x Modulo n abzuleiten.

d. Um die Spur des Anwenders wiederzufinden, zieht die Autorität, wobei das genannte Kryptogramm immer noch zwei Teile enthält, aus dem Kryptogramm El-Gamal der Entschlüsselung den Teil:
$v = c'$ mod n,
in dem r der Zufall der durch die Entschlüsselung gewählten Verschlüsselung ist.

e. Da $\Phi(n)$ bekannt ist, findet die Autorität die Bits ID[i] durch den folgenden Algorithmus:

(1) Berechnung für i, das von 1 bis k : $y[i] = v^{\Phi(n)/p[i]}$ mod n reicht

(2) Wenn $y[i] = 1$, dann ist $\square [i] = 1$, sonst ist $\mu [i] = 0$

(3) Berechnung
$ID' = \Sigma 2^{j-i} \mu[i]$

(4) Wiedergewinnung: ID = CCE(ID')

in der CCE einen Fehlerkorrekturmechanismus bezeichnet.

9. Kryptographisches System gemäß Anspruch 4 bis 7 mit einem Schlüssel-Sequestersystem, **dadurch gekennzeichnet, dass** es auf dem als Diffie-Hellmann bezeichneten Schlüsselaustauschmechanismus beruht, in dem eine durch eine zufällige Potenzierung a Modulo n von g durch einen der Teile erhaltene Zahl c durch die genannte Sequesterautorität abgefangen wird.

$$c - g^a \text{ mod } n$$

die genannte Sequesterautorität gewinnt a auf folgende Weise wieder:

a. Da die Faktorierung von n bekannt ist, gewinnt die genannte Autorität mithilfe des Entschlüsselungsalgorithmus den Wert

$$a = \alpha \text{ mod } AB$$

d. h. $a = \alpha + \beta AB$;

wieder.

b. Die genannte Autorität berechnet: $\lambda = c / g^{\alpha}$ mod n $= g^{\alpha} A B$ mod n.

c. Durch Verwendung eines Kryptanalyse-Algorithmus berechnet die Autorität den diskreten Algorithmus β

$$\lambda = (g^{AB})^{\alpha} \bmod n$$

d. Die Autorität kommt auf

$$a = \alpha + \beta AB$$

und entschlüsselt die auf der Nutzung von a basierenden Kommunikationen.

10. Kryptographisches System gemäß Anspruch 2 bis 9 mit einem Entschlüsselungs-Verschlüsselungs-System und einem Schlüssel-Sequestersystem, **dadurch gekennzeichnet, dass** das Modul RSA n das Produkt aus drei Faktoren ist:

$$n = (A_{PA} + 1) \times (B_{Pa} + 1) \times (C_{PC} + 1)$$

in dem: $P_A$, $P_B$, $P_C$ Primzahlen mit einer Größe von über 320 Bit sind
$(A_{PA} + 1)$, $(B_{Pa} + 1)$, $(C_{PC} + 1)$ jeweils mit p, q, r bezeichnete Primzahlen RSA sind,
A, B und C jeweils das Produkt aus (mit p[i], j = 1 bis k bezeichneten) Primzahlen k/3 sind, wobei die p[i] jeweils von einer relativ kleiner Größe (zwischen 2 und 16 Bit) sind und gegenseitig Primzahlen sein können und k eine zwischen 10 und 120 begriffene ganze Zahl ist, so dass das Produkt ABC wenigstens 160 Bit hat.

11. Kryptographisches System gemäß Anspruch 1 bis 10 mit einem Verschlüsselungs-Entschlüsselungs-System oder Sequestersystem, **dadurch gekennzeichnet, dass** die Verschlüsselungs-, Entschlüsselungs- und Schlüssel-Sequestergeräte Computer, Chipkarten, PCMIA-Karten, Ansteckmarken, Karten ohne Kontakt oder jedes andere tragbare Gerät sind.

12. Vorrichtung mit einem kryptographischen System gemäß einem der vorherigen Ansprüche, **dadurch gekennzeichnet, dass** sie ein Verschlüsselungssystem und / oder ein Entschlüsselungssystem und / oder eine Schlüssel-Sequestersystem umfasst, wobei die genannten Systeme untereinander durch einen Austausch elektronischer Signale oder über einen Austausch von Funkwellen oder Infrarotsignalen kommunizieren.

**FIGURE 1**

**FIGURE 2**

```
CHIFFREUR [n,g,m]          | I |        DECHIFFREUR [φ(n),{p(i)}]
                           | N |
calculer c = g^m mod n     | T |
                           | E |
envoyer  c »» »» »» »»      | R |   »» »» »» recevoir c
                           | F |
                     -     | A |        pour i allant de 1 à k
                           | C |
                           | E |        {
                           |   |
                           | D |        calculer y[i] = c^(φ(n)/p(i)) mod n
                           | E |
                           |   |        pour j allant de 1 à p(i)
                           | C |        {
                           | O |        si g^(j φ(n)/p(i)) mod n = y[i] alors
                           | M |        affecter μ[i] = j
                           | M |        }
                           | U |        }
                           | N |
                           | I |        recomposer m = TRC({μ[i] mod p[i]})
                           | C |
                           | A |
                           | T |
                           | I |
                           | O |
                           | N |
```

FIGURE 3